# EUROPEAN PATENT APPLICATION

(11) **EP 4 672 474 A1**
(43) Date of publication of application: **31.12.2025**
(21) Application number: 24898304.1
(22) Date of filing: 21.11.2024
(51) Int. Cl.: H01M 50/451, H01M 10/0562, H01M 50/457, H01M 10/052, H01M 50/417, H01M 50/431, H01M 4/525, H01M 4/505, H01M 4/48, H01M 10/0568

(54) **LITHIUM SECONDARY BATTERY WITH EXCELLENT THERMAL STABILITY, AND MANUFACTURING METHOD THEREFOR**

(30) Priority: 29.11.2023 KR 20230169616; 05.12.2023 KR 20230174493; 20.11.2024 KR 20240166418
(71) Applicant: LG Energy Solution, Ltd., Seoul 07335 (KR)
(72) Inventor: LIM, Taeseob, Daejeon 34122 (KR); RYU, Jihoon, Daejeon 34122 (KR); BYUN, Seoungwoo, Daejeon 34122 (KR); KIM, Dong Kyu, Daejeon 34122 (KR); JUN, Youngjin, Daejeon 34122 (KR); JANG, Eunji, Daejeon 34122 (KR)
(74) Representative: BCKIP Part mbB
(86) International application number: PCT/KR2024/096630
(87) International publication number: WO 2025/116712

(57) **Abstract**

According to an embodiment of the present disclosure, there is provided a lithium secondary battery comprising:
a positive electrode which includes a positive electrode current collector, and a positive electrode active material layer formed on one side or both sides of the positive electrode current collector,
a negative electrode which includes a negative electrode current collector, and a negative electrode active material layer formed on one side or both sides of the negative electrode current collector, and
a separator which includes a substrate, and an oxide-based solid electrolyte layer formed on one side or both sides of the substrate and including lithium aluminum titanium phosphate(LATP),
wherein the negative electrode active material layer and the oxide-based solid electrolyte layer face each other,
wherein an inorganic layer containing a reduced product of the LATP and an SEI material is formed at an interface between the oxide-based solid electrolyte layer and the negative electrode active material layer, and
wherein the atom content of F in the inorganic layer is included at 7 to 15 atomic percent(%) based on all atoms present in the inorganic layer.

## Description

### [TECHNICAL FIELD]

### Cross-Reference to Related Application(s)

This application claims priority to and the benefit of Korean Patent Application No. 10-2023-0174493, filed on December 5, 2023, Korean Patent Application No. 10-2023-0169616, filed on November 29, 2023, and Korean Patent Application No. 10-2024-0166418, filed on November 20, 2024, with the Korean Intellectual Property Office, the disclosures of which are incorporated herein by reference in their entirety.

The present disclosure relates to a lithium secondary battery having excellent thermal safety and a method for manufacturing the same.

### [BACKGROUND]

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibit high energy density and operating potential, have a long cycle life, and a low self-discharge rate, and has been commercialized and widely used.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, numerous studies have been actively made to use a lithium secondary battery having a high energy density and a high discharge voltage, a part of which are in the commercializing stage.

A lithium secondary battery generally has a structure in which a non-aqueous electrolytic solution is impregnated into an electrode assembly including a positive electrode, a negative electrode and a porous separator. In general, the positive electrode is prepared by coating a positive electrode mixture including a positive electrode active material onto an aluminum foil, and the negative electrode is prepared by coating a negative electrode mixture including a negative electrode active material onto a copper foil.

Usually, the positive electrode active material is a lithium transition metal oxide, and the negative electrode active material is a carbon-based material.

Recently, however, with the growth of the fields of devices requiring high-capacity batteries such as electric vehicles and hybrid electric vehicles, the energy density level required for lithium secondary batteries is continuously increasing, and attempts are being made to use a Si-containing negative electrode containing Si with high theoretical capacity as a negative electrode active material.

However, a Si-based material containing Si is in the spotlight because it has very high energy density, but the coulomb efficiency decreases due to the irreversible phase formation of lithium silicate, and the thermal stability is poor due to the explosive reaction that occurs during thermal runaway, so it is a material that needs to be improved.

At this time, the coulomb efficiency can be improved to some extent by compensating for irreversible reactions through a pre-lithiation process of the Si-based material, however, the SEI formed at this time must be formed with good quality so that the increase in resistance is reduced, and thus can improve the output characteristics, but the thermal safety remains an issue.

### [DETAILED DESCRIPTION OF THE INVENTION]

### [Technical Problem]

Therefore, it is an object of the present disclosure to provide a lithium secondary battery having improved thermal safety as well as improved coulomb efficiency by controlling the SEI formation mode.

### [Technical Solution]

According to an embodiment of the present disclosure, there is provided a lithium secondary battery comprising:
a positive electrode which includes a positive electrode current collector, and a positive electrode active material layer formed on one side or both sides of the positive electrode current collector,
a negative electrode which includes a negative electrode current collector, and a negative electrode active material layer formed on one side or both sides of the negative electrode current collector, and
a separator which includes a substrate, and an oxide-based solid electrolyte layer formed on one side or both sides of the substrate and including lithium aluminum titanium phosphate(LATP),
wherein the negative electrode active material layer and the oxide-based solid electrolyte layer face each other,
wherein an inorganic layer containing a reduced product of the LATP and an SEI material is formed at an interface between the oxide-based solid electrolyte layer and the negative electrode active material layer, and
wherein the atom content of F in the inorganic layer is included at 7 to 15 atomic percent(%) based on all atoms present in the inorganic layer.

Here, the inorganic layer fills a part or all of the pores of the oxide-based solid electrolyte layer, or forms a separate layer at an interface between the oxide-based solid electrolyte layer and the negative electrode active material layer, or include all of these forms.

In this case, specifically, the inorganic layer may be configured to fill the pores of the oxide-based solid electrolyte layer at 10 volume% to 100 volume% based on the total volume of the pores, and form a separate layer having a thickness of 5 nm to 100 nm.

More specifically, the LATP reduced product is formed in a form in which 50 % or more on a weight basis fill the pores of the oxide-based solid electrolyte layer along the surface of the LATP particles,
the SEI material may be formed together with the LATP reduced product in a space charge region where the concentration of Li⁺ is locally high, or may be formed in a form that fills the pores of the oxide-based solid electrolyte layer on the surface of the LATP reduced product, or may be formed as a separate layer on the surface of the oxide-based solid electrolyte layer, or may be formed to include all of these forms.

The LATP reduced product, which is one component of the inorganic layer, may include a lithiated-LATP formed by a spontaneous lithiation reaction of the LATP as shown in following Reaction Formula 1.

[Reaction Formula 1] Li_{1.3}Al_{0.3}Ti_{1.7}(PO₄)₃ -> Li₃Al_{0.3}Ti_{1.7}(PO₄)₃

Further, the SEI material, which is another component of the inorganic layer, may include LiF, and particularly, it may further include at least one material selected from the group consisting of Li₂CO₃, and Li₂O.

Moreover, the inorganic layer may be composed of a LATP reduced product and an SEI material.

Meanwhile, the oxide-based solid electrolyte layer may be formed on both sides of the substrate.

The substrate may be a polyolefin substrate, and the oxide-based solid electrolyte layer may be composed of an oxide-based solid electrolyte containing lithium aluminum titanium phosphate(LATP) and a binder.

Here, the oxide-based solid electrolyte layer may be formed to a thickness of 0.1 µm to 20 µm on one side of the substrate.

Meanwhile, the positive electrode active material layer may include a lithium transition metal oxide represented by the following Chemical Formula 1 as a positive electrode active material.

[Chemical Formula 1] Li₁₊ₓNiₐCo_{b}Mn_{c}M_{1-(a+b+c)}O₂

wherein,
M is at least one selected from the group consisting of Al, Fe, V, Cr, Ti, Ta, Mg, and Mo, and
0≤x≤0.5, 0<a<1, 0<b<1, 0<c<1.

Further, the negative electrode active material layer may include 80 wt.% or more of a pre-lithiated silicon oxide as a negative electrode active material based on the total weight of the negative electrode active material.

Moreover, the lithium secondary battery may further include an electrolyte which includes LiFSI as a lithium salt, and includes fluoroethylene carbonate(FEC) as an electrolyte solvent.

According to another embodiment of the present disclosure, there is provided a method for manufacturing the lithium secondary battery, the method comprising the steps of:
forming an oxide-based solid electrolyte layer including lithium aluminum titanium phosphate(LATP) on one side or both sides of a substrate to prepare a separator;
forming a positive electrode acitve material layer on one side or both sides of a positive electrode current collector to prepare a positive electrode, and forming a negative electrode acitve material layer on one side or both sides of a negative electrode current collector to prepare a negative electrode;
interposing the separator between the positive electrode and the negative electrode so that the oxide-based solid electrolyte layer and the negative electrode active material layer face each other to thereby prepare an electrode assembly;
incorporating the electrode assembly and the electrolyte into a secondary battery case to manufacture a secondary battery;
positioning the secondary battery between a plurality of pressure plates and applying pressure to the secondary battery; and
activating the secondary battery under a state of applying pressure thereto.

Here, the plurality of pressure plates may be fastened with a plurality of pressure bolts to apply pressure. Specifically, the pressure bolt may press the secondary battery with a fastening strength of 6 kgf·cm or more, and more specifically, the pressure bolt may press the secondary battery at a fastening strength in the range of 10 to 20 kgf·cm.

Further, the activating step may be performed under a temperature condition of 40°C to 60°C.

### [BRIEF DESCRIPTION OF THE DRAWING]

FIG. 1 is a schematic diagram showing a state in which an inorganic layer is formed at an interface between a negative electrode and a separator according to an embodiment of the present disclosure.
FIG. 2 is a top view of a pressing device applied to an activation process in a method for manufacturing a lithium secondary battery according to another embodiment of the present disclosure.
FIG. 3 is a cross-sectional view of the pressing device of FIG. 2.
FIG. 4 is an SEM photograph of the surface of a separator obtained by disassembling lithium secondary batteries manufactured according to Experimental Example 1.
FIG. 5 is an XRD graph of a separator obtained by disassembling lithium secondary batteries manufactured according to Experimental Example 1.
FIG. 6 is a graph showing a Si component analysis depending on the coating layer depth of a negative electrode obtained by disassembling lithium secondary batteries manufactured according to Experimental Example 2.
FIG. 7 is a graph showing a component analysis depending on the coating layer depth of a negative electrode obtained by disassembling lithium secondary batteries manufactured according to Experimental Example 2.
FIG. 8 is a graph showing a component analysis depending on the coating layer depth of the separator obtained by disassembling lithium secondary batteries manufactured according to Experimental Example 3.
FIG. 9 is a graph showing a DSC evaluation of lithium secondary batteries manufactured according to Experimental Example 4.
FIG. 10 is a graph showing a heat evaluation of lithium secondary batteries manufactured according to Experimental Example 5.
FIG. 11 is a graph showing a DC-IR evaluation of lithium secondary batteries manufactured according to Experimental Example 6.
FIG. 12 is a graph showing the comparison of the discharge rate characteristics of lithium secondary batteries manufactured according to Experimental Example 6.
FIG. 13 is a graph showing a DC-IR evaluation of lithium secondary batteries manufactured according to Experimental Example 7.
FIG. 14 is a graph showing the comparison of the discharge rate characteristics of lithium secondary batteries manufactured according to Experimental Example 7.

### [DETAILED DESCRIPTION OF THE EMBODIMENTS]

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Meanwhile, the terms "consists of" and/or "consisting of" as used herein mean that in addition to the recited components, other components are not contained more than impurity levels, i.e., trace amounts.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Further, throughout the descriptions herein, the terms "in a plan view" indicate viewing an object from above, and the terms "in a cross-sectional view" indicate viewing a vertical cross section of an object from side.

### Lithium secondary battery

A lithium secondary battery according to an embodiment of the present disclosure comprises:
a positive electrode which includes a positive electrode current collector, and a positive electrode active material layer formed on one side or both sides of the positive electrode current collector,
a negative electrode which includes a negative electrode current collector, and a negative electrode active material layer formed on one side or both sides of the negative electrode current collector, and
a separator which includes a substrate, and an oxide-based solid electrolyte layer formed on one side or both sides of the substrate and including lithium aluminum titanium phosphate(LATP),
wherein the negative electrode active material layer and the oxide-based solid electrolyte layer face each other,
wherein an inorganic layer containing a reduced product of the LATP and an SEI material is formed at an interface between the oxide-based solid electrolyte layer and the negative electrode active material layer, and
wherein the atom content of F in the inorganic layer is included at 7 to 15 atomic percent(%) based on all atoms present in the inorganic layer.

### Positive electrode

A positive electrode has a structure which includes a positive electrode current collector, and a positive electrode active material layer formed on one side or both sides of the positive electrode current collector.

Here, the positive electrode current collector is not particularly limited so long as it has conductivity without causing any chemical change in the battery. For example, as the current collector, stainless steel, aluminum, nickel, titanium, fired carbon, or aluminum or stainless steel of which surface is treated with one of carbon, nickel, titanium, silver, or the like may be used.

The positive electrode current collector may have a thickness of 3µm to 500µm, and may have fine protrusions and depressions formed on a surface thereof to enhance adherence of a positive electrode active material layer. For example, the positive electrode current collector may be used in various forms such as a film, a sheet, a foil, a net, a porous body, a foaming body, and a non-woven fabric structure.

The positive electrode active material layer may include a positive electrode active material, and optionally, a conductive material, a binder, and other additives.

The positive electrode active material is not limited as long as it is a compound capable of reversibly intercalating and deintercalating lithium, wherein the positive electrode active material may specifically include a lithium metal oxide including lithium and at least one metal such as cobalt, manganese, nickel, or aluminum. More specifically, the positive electrode active material may include a lithium transition metal oxide represented by the following Chemical Formula 1.:

[Chemical Formula 1] Li₁₊ₓNiₐCo_{b}Mn_{c}M_{1-(a+b+c)}O₂

wherein,
M is at least one selected from the group consisting of Al, Fe, V, Cr, Ti, Ta, Mg, and Mo, and
0≤x≤0.5, 0<a<1, 0<b<1, 0<c<1.

In addition, the positive electrode active material may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., Li_{1+x'}Ni_{1-Y}Mn_{Y}O₂(where -0.5≤x'≤0.5, 0<Y<1), Li_{1+x"} Mn_{2-Z}Ni_{Z}O₄(where -0.5≤x"≤0.5, 0<Z<2), etc.), lithium-nickel-cobalt-based oxide (e.g., Li_{1+x‴}Ni_{1-Y1}Co_{Y1}O₂(where-0.5≤x‴≤0.5, 0<Y1<1), etc.), lithium-manganese-cobalt-based oxide (e.g., Li_{1+xʺʺ}Co_{1-Y2}Mn_{Y2}O₂(where, -0.5≤xʺʺ≤0.5, 0<Y2<1), Li_{1+xʺ‴}Mn_{2-Z1}Co_{Z1}O₄(where -0.5≤xʺ‴≤0.5, 0 < Z1 < 2), etc.), lithium-nickel-manganese-cobalt-based oxide (e.g., Li₁₊ₐ₁(NiₚCo_{q}Mnᵣ)O₂(where -0.5≤a1≤0.5, 0<p<1, 0<q<1, 0<r<1, p+q+r=1) or Li₁₊ₐ₂(Niₚ₁Co_{q1}Mnᵣ₁)O₄ (where -0.5≤a2≤0.5, 0 < p1 < 2, 0 < q1 < 2, 0 < r1 < 2, p1+q1+r1=2), etc.), or lithium-nickel-cobalt-transition metal(M) oxide (e.g., Li₁₊ₐ₃(Niₚ₂Co_{q2}Mnᵣ₂Mₛ₂)O₂ (where M is selected from the group consisting of Al, Fe, V, Cr, Ti, Ta, Mg and Mo, and a3, p2, q2, r2 and s2 are atomic fractions of each independent elements, wherein -0.5≤a3≤0.5, 0 < p2 < 1, 0 < q2 < 1, 0 < r2 < 1, 0 < s2 < 1, p2+q2+r2+s2=1), etc.), lithium iron phosphate (e.g., Li₁₊ₐ₄Fe₁₋ₚ₃Mₚ₃(PO_{4-b4})X_{b4} (where M is at least one selected from Al, Mg, and Ti, X is at least one selected from F, S, and N, and -0.5≤a4≤0.5, 0≤p3≤0.5, 0≤b4≤0.1), and any one thereof or a compound of two or more thereof may be included.

Among these materials, in terms of the improvement of the capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), lithium iron phosphate (e.g., LiFePO₄), etc., and a mixture of two or more thereof may be used, and it may may include Li(Ni_{0.86}Co_{0.05}Mn_{0.07}Al_{0.02})O₂, which is a lithium transition metal oxide represented by Chemical Formula 1.

The positive electrode active material may be included in an amount of 60 to 98 wt.%, preferably 80 to 98 wt.%, and more preferably 90 to 98 wt.%, based on the total weight of the positive electrode active material layer.

The conductive material is a component for further improving the conductivity of the positive electrode active material. Such a conductive material is not particularly limited as long as it has conductivity without causing any chemical change in the battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be contained in an amount of 0.1 to 20 wt.%, specifically 0.5 to 10 wt.%, and more specifically 0.5 to 5 wt.%, based on the total weight of the positive electrode active material layer.

The binder is a component that assists in the bonding between the conductive material, the positive electrode active material and the positive electrode current collector. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polyethylene, polypropylene, ethylene-propylene-diene monomer, sulfonated ethylene-propylene-diene monomer, styrene-butadiene rubber, fluororubber, various copolymers thereof, or the like.

Typically, the binder may be included in an amount of 0.5 to 20wt.%, specifically 0.5 to 10 wt.%, and more specifically 0.5 to 5 wt.% based on the total weight of the positive electrode active material layer.

In addition, the other additives may further include, for example, a filler and the like as a component for inhibiting the expansion. The filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

### Negative electrode

A negative electrode has a structure in which a negative electrode active material layer is formed on one side or both sides of the negative electrode current collector, similarly to the positive electrode.

The negative electrode current collector is not particularly limited as long as it has high conductivity without causing any chemical change in the battery. Examples of the negative electrode current collector may include copper, stainless steel, aluminum, nickel, titanium, fired carbon, a copper or stainless steel of which surface is treated with carbon, nickel, titanium, silver, or the like, an aluminum-cadmium alloy, or the like.

The negative electrode current collector may typically have a thickness of 3 to 500µm. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The negative electrode active material layer may include the above-mentioned conductive material, binder, and other additives together with the negative active material.

In the present disclosure, the negative electrode active material may include 80 wt.% or more of a pre-lithiated silicon oxide capable of exhibiting high energy density, etc., based on the total weight of the negative electrode active material.

As mentioned above, the silicon oxide is a material that has problems such as a decrease in coulomb efficiency due to the formation of an irreversible phase of lithium silicate, and poor thermal safety due to an explosive reaction that occurs during thermal runaway, and it was previously only used in a mixture with a carbon-based material at 10 wt.% or less, and more specifically 5 wt.% or less, based on the total weight of the negative electrode active material.

However, according to the present disclosure, since the coulomb efficiency is improved by compensating for the irreversible reaction through the pre-lithiation process of the Si-based material, a inorganic matter-rich SEI with a high F content may be formed thickly through the reduced product of LATP described below, thereby improving thermal safety, and thus can be included in an amount of 80 wt.% to 100 wt.%, specifically 90 wt.% to 100 wt.%, and more specifically 100 wt.%.

Meanwhile, the silicon oxide may can be specifically represented by the following Chemical Formula 2.

[Chemical Formula 2] SiOx

wherein, x is 0<x<2.

Specifically, the silicon oxide may be SiO₂ or SiO, and more specifically, SiO.

Here, the SiO is the total composition of a mixture of Si and SiO₂, and the x value is determined according to the mixing ratio of Si and SiO₂.

This silicon oxide may be included as a negative active material in a pre-lithiated state, and the pre-lithiation may be performed, for example, by a physical or electronic method in which Li is brought into contact with the silicon oxide powder.

Meanwhile, the negative active material may further include at least one carbon-based material selected from the group consisting of graphite, amorphous hard carbon, low-crystalline soft carbon, carbon black, acetylene black, Ketjen black, super P, graphene and fibrous carbon; Si-based materials; metal composite oxides such as LiₓFe₂O₃(0≤x≤1), LiₓWO₂(0≤x≤1), SnₓMe₁₋ₓMe'_{y}O_{z} (where Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

### Separator

The separator has a structure which includes a substrate, and an oxide-based solid electrolyte layer formed on one side or both sides of the substrate and including lithium aluminum titanium phosphate(LATP).

Here, the substrate can be used without particular limitation as long as it is commonly used as a separator in a lithium secondary battery, and those having an excellent electrolyte liquid moisture-containing ability while having low resistance against ion migration of the electrolyte liquid are particularly preferred.

For example, the substrate is a polyolefin substrate such as an ethylene homopolymer, a propylene homopolymer, an ethylene/butene copolymer, an ethylene/hexene copolymer, and an ethylene/methacrylate copolymer, and a porous polymer film or a laminated structure of two or more layers thereof may be used. Further, a typical porous nonwoven fabric, for example, a nonwoven fabric made of a glass fiber having a high melting point, a polyethylene terephthalate fiber or the like can be used as the separator, but specifically, it may be a polyolefin substrate.

An oxide-based solid electrolyte layer is formed on one side or both sides of the substrate.

In this case, the oxide-based solid electrolyte layer may include an oxide-based solid electrolyte containing lithium aluminum titanium phosphate(LATP) and a binder.

In addition to the lithium aluminum titanium phosphate, the oxide-based solid electrolyte layer may further, as the other oxide-based solid electrolyte, at least one lithium metal oxide or lithium metal phosphate selected from NASICON-type solid electrolyte, LISICON-type solid electrolyte, Garnet-type solid electrolyte, Perovskite-type solid electrolyte, and LiPON-type solid electrolyte. More specific examples thereof may further include at least one selected from the group consisting of LAGP(lithium aluminum germanium phosphate)-based compound, LLZO(lithium lanthanum zirconium oxide)-based compound, LLZTO(lithium lanthanum zirconium tantalum oxide)-based compound, LLTO(lithium lanthanum titanium oxide)-based compound, LSTP(lithium silicon titanium phosphate)-based compound, and LGPO(lithium germanium phosphate)-based compound. Specifically, it may be composed of lithium aluminum titanium phosphate.

The oxide-based solid electrolyte may be included in an amount of 70 wt.% to 99 wt.%, and specifically 80 wt.% to 99 wt.%, based on the total weight of the oxide-based solid electrolyte layer.

If the content is too low and outside the above range, it is not be possible to obtain the sufficient reduced product intended by the present application, and if the content is too high, the content of the binder connecting them is too low, so that the adhesive strength between the particles is weakened and thus the mechanical properties may be deteriorated, which is not preferable.

The average diameter(D50) of the oxide-based solid electrolyte particles may be 50 nanometers to 10 micrometers, specifically 50 nanometers to 5 micrometers, and more specifically 50 nanometers to 1 micrometer.

If the average diameter is too small and outside the above range, aggregation between particles may occur due to a decrease in the dispersibility. Conversely, if the average diameter is too large, the pores are formed too large by the oxide-based solid electrolyte, which is rather not preferable in terms of resistance. That is, when the average diameter satisfies the above range, the lithium ion conductivity can be increased to thereby reduce resistance and exhibiting improved secondary battery performance.

As used herein, the average diameter D50 means a particle diameter at which cumulative volumes of particles reach 50% in the particle size distribution curve of the particles. The D50 can be measured, for example, by using a laser diffraction method. The laser diffraction method can generally measure particle diameters ranging from a submicron range to several millimeters, and can obtain results with high reproducibility and high resolvability.

Meanwhile, the binder, which is another component of the oxide-based solid electrolyte layer, is not limited as long as it does not cause a side reaction with the electrolyte solution, but particularly, a binder having a glass transition temperature(Tg) as low as possible can be used, and the temperature is preferably in the range of -200 to 200°C.

Further, the binder does not necessarily need to have ion conduction ability, but it is more preferable to use a polymer having ion conduction ability.

Therefore, the binder preferably has a high dielectric constant if possible. Actually, since the degree of dissociation of a salt in an electrolyte depends on the dielectric constant of the electrolyte solvent, the higher the dielectric constant of the polymer, the more the degree of salt dissociation in the electrolyte can be improved. The dielectric constant of the polymer can be 1 or more, specifically in the range of 1.0 to 100 (measurement frequency = 1 kHz), and is particularly preferably 10 or more.

In addition to the foregoing functions, the binding material may have characteristic which can exhibit a high electrode impregnation (degree of swelling) by gelation when being impregnated into the liquid electrolyte. When the binding material has practically excellent electrode impregnation, the electrolyte injected after the battery is assembled may permeates into the polymer, and the polymer containing the absorbed electrolyte has an electrolyte ion conducting ability. Therefore, if possible, a polymer with a solubility parameter of 15 to 45 MPa^{1/2} is preferred, and the ranges of 15 to 25 MPa^{1/2} and 30 to 45 MPa^{1/2} are more preferred. When the solubility parameter is less than 15 MPa^{1/2} and more than 45 MPa^{1/2}, it becomes difficult to be swelled by a typical liquid electrolyte for batteries.

Examples of the binder include at least one selected from the group consisting of polyvinylidene fluorideco-hexafluoropropylene, polyvinylidene fluoride-cotrichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

In detail, the oxide-based solid electrolyte layer of the present application is intended to allow the LATP contained in such an oxide-based solid electrolyte layer to face the negative electrode active material layer of the negative electrode and thereby form a reduced product of LATP at the interface between them, and therefore, is preferably composed of an oxide-based solid electrolyte containing the LATP and a binder, and it is preferable to contain no other materials since they may interfere with the reduction of LATP.

Therefore, the binder may be included in an amount of 1 wt.% to 30 wt.%, specifically 1 wt.% to 20 wt.%, based on the total weight of the oxide-based solid electrolyte layer.

Such an oxide-based solid electrolyte layer may be formed on one side or both sides of the substrate, but is preferably formed on both sides since it exhibits a more excellent overvoltage reduction when formed on both sides. Of course, when the oxide-based solid electrolyte layer is formed on only one side, the electrode assembly must be manufactured so that the oxide-based solid electrolyte layer faces the negative electrode active material layer of the negative electrode in order to form a reduced product of LATP intended by the present application.

In this case, the oxide-based solid electrolyte layer may be formed on one side of the substrate to a thickness of 0.1 µm to 20 µm, and specifically, to a thickness of 1 µm to 10 µm.

If the thickness is too thin and outside the above range, the effect due to the generatio0n of the reduced product of LATP intended by the present application cannot be sufficiently obtained, and if the thickness is too thick, the resistance may increase, which is not preferable.

Meanwhile, the total thickness of the separator including the substrate and the oxide-based solid electrolyte layer may be 5 micrometers to 50 micrometers, specifically 5 micrometers to 40 micrometers, and more specifically 10 micrometers to 30 micrometers. If the thickness of the separator satisfies the above range, it is possible to effectively prevent short circuits between the positive electrode and the negative electrode while minimizing the resistance value of the lithium secondary battery. As a result, it is possible to prevent a decrease in energy density of lithium secondary batteries and improve life characteristics.

Meanwhile, if the oxide-based solid electrolyte layer is formed on one side or both sides, the oxide-based solid electrolyte layer is made to face the negative electrode active material layer of the negative electrode, whereby the reduced product of LATP is formed at an interface between the oxide-based solid electrolyte layer and the negative electrode active material layer. Specifically, lithium ions move during the charging/discharging, particularly the activation process of the lithium secondary battery, thereby forming a reduced product.

Here, the reduced product of LATP may include a lithiated LATP formed by a spontaneous lithiation reaction of the LATP as shown in the following Reaction Formula 1.

[Reaction Formula 1] Li_{1.3}Al_{0.3}Ti_{1.7}(PO₄)₃ -> Li₃Al_{0.3}Ti_{1.7}(PO₄)₃

Further, at the interface between the negative electrode and the separator, lithium ions reacting with the electrolyte during the charge/discharge, particularly the activation process, of the lithium secondary battery form an SEI material.

Therefore, an inorganic layer containing a reduced product of LATP and an SEI material is formed at the interface between the oxide-based solid electrolyte layer and the negative electrode active material layer, and specifically, the inorganic layer may be composed of the LATP reduced product and the SEI material.

In this case, the SEI material may include LiF, and particularly, may further include at least one material selected from the group consisting of Li₂CO₃ and Li₂O. In other words, the inorganic layer may include a lithiated-LATP, and LiF, and in addition to this, may include at least one material selected from the group consisting of Li₂CO₃ and Li₂O.

Such an inorganic layer is formed by bonding between LATP and lithium ions of the oxide-based solid electrolyte layer and the reaction between the electrolyte and lithium ions, and therefore, can be mainly formed on the surface of the oxide-based solid electrolyte layer.

In this case, since the oxide-based solid electrolyte layer includes pores therein, the inorganic layer may be formed in a form that fills a part or all of the pores of the oxide-based solid electrolyte layer, or may form a separate layer at the interface between the oxide-based solid electrolyte layer and the negative electrode active material layer, or may include all of these forms, that is, may be included in the pores or may be formed while forming a layer.

When the inorganic layer fills the pores of the oxide-based solid electrolyte layer, it may be filled by 10 volume% to 100 volume%, specifically 30 volume% to 100 volume%, and more specifically 50 volume% to 80 volume% based on the total volume of the pores.

In addition, when the inorganic layer is formed as a separate layer at the interface between the oxide-based solid electrolyte layer and the negative electrode active material layer, this layer may have thickness of 5 nm to 100 nm, specifically 5 nm to 50 nm, and more specifically 10 nm to 50 nm.

More specifically, since the LATP of the oxide-based solid electrolyte layer begins to form a reduced product while meeting with the pre-lithiated silicon oxide,

The LATP reduced substance is formed in a form that fills the pores of the oxide-based solid electrolyte layer along the surface of the LATP particles by more than 50 wt.% on a weight basis, and when the surface of the separator has a space charge region where the concentration of Li+ is locally high due to charging such as the activation process of the lithium secondary battery, an SEI material is formed by a side reaction between Li ions and the electrolyte in the space charge region.

Therefore, the SEI material may be formed together with the LATP reduced product in the above region, or may be formed in a form of filling the pores of the oxide-based solid electrolyte layer on the surface of the LATP reduced product, or may be formed as a separate layer on the surface of the oxide-based solid electrolyte layer, or may be formed to include all of these forms.

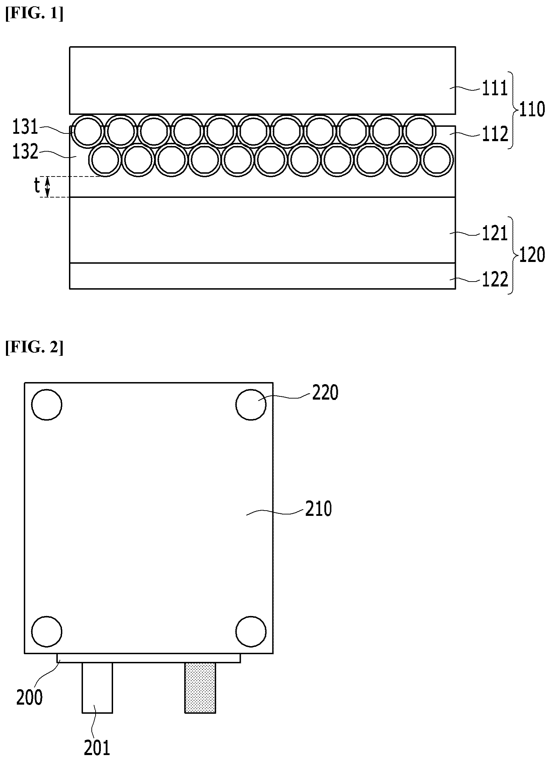

In order to more easily explain the formation of such an inorganic layer, FIG. 1 shows a schematic diagram of the interface where the separator and the negative electrode of the present disclosure come into contact with each other.

Referring to FIG. 1, the separator 110 has a structure which includes a substrate 111 and an oxide-based solid electrolyte layer 112 including LATP formed on one side of the substrate 111. This oxide-based solid electrolyte layer 112 is in direct contact with the negative electrode acitve material layer 121 formed on the negative electrode current collector 122 of the negative electrode 120, and when LATP and Li ions meet at the interface between them, a reduced product 131 containing a lithiated-LATP in which LATP is reduced by a spontaneous reaction is formed. At this time, 50 wt.% or more of the reduced product is formed along the surface of the LATP particles and fills the pores of the oxide-based solid electrolyte layer 112. Then, the pores of the oxide-based solid electrolyte layer and the surface thereof have a space charge region 132 where the concentration of Li + is locally high, and an SEI material is formed through a side reaction of the electrolyte in this region 132, an SEI material is formed, which fills the remaining pores of the oxide-based solid electrolyte layer together with or separately from the LATP reduced product, and is also formed as a separate layer having a thickness t, and an additional inorganic layer 132 is formed on the surface of the oxide-based solid electrolyte layer 112.

Meanwhile, in order to achieve the effect intended by the present disclosure, the inorganic layer may contain an F atom in an amount of 7 to 15 atomic percent(%), specifically, 8 to 15 atomic percent(%), and more specifically, 10 to 13 percent(%), based on all atoms present in the inorganic layer.

If the F atom content is low and outside the above range, a thick layer of organic components with low interatomic binding energy and low lithium ion conductivity is formed instead of an inorganic matter-rich, i.e., inorganic rich SEI layer, so that an SEI layer that is easily decomposed is formed, whereby the thermal stability is unstable and the resistance increases, which is not preferable. On the other hand, if the F atom content is too high, a material containing such F elements must be excessively added to the electrolyte, whereby side reactions easily occur inside the electrolyte, and the viscosity of the electrolyte increases, and the ion conductivity through which lithium ions move through the electrolyte decreases, which is not preferable.

In addition, as mentioned above, the inorganic layer grows at the pores of the oxide-based solid electrolyte layer and the interface between them and the negative electrode, so that its thickness can be formed thicker than a typical SEI layer, which is more effective in improving thermal safety.

### Electrolyte

Meanwhile, the lithium secondary battery may further include an electrolyte.

Here, the electrolyte is a lithium non-aqueous electrolyte, and may include a lithium salt and a non-aqueous organic solvent.

The lithium salt is used as a medium for transferring ions within a lithium secondary battery. For example, the lithium salt may include Li⁺ as a cation, and may include at least one selected from the group consisting of F⁻, Cl⁻, Br⁻, I⁻, NO3⁻, N(CN)2⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single substance or a mixture of two or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), but more specifically, the lithium salt may essentially include Li[N(SO₂F)₂], i.e., LiFSI, thereby increasing the F atom content in the inorganic layer and reducing thermal decomposition to improve thermal safety.

In addition to these, the lithium salt commonly used in an electrolyte of a lithium secondary battery can be used without particular limitation.

The concentration of the lithium salt can be appropriately changed within a generally usable range, but the lithium salt may be included in the electrolyte at a concentration of 0.5 M to 3 M, specifically at a concentration of 1 M to 2.5 M, and more specifically, at a concentration of 1 M to 2 M, in the electrolyte in order to obtain an optimal effect of forming a film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, so that electrolyte impregnation can be improved.

The non-aqueous organic solvent is not limited as long as it may minimize decomposition due to an oxidation reaction or the like during charge and discharge of the lithium secondary battery, and may exhibit desired characteristics with an additive. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate(PC), 1,2-butylene carbonate, 2,3-butylene carbonate, 1,2-pentylene carbonate, 2,3-pentylene carbonate, vinylene carbonate, and fluoroethylene carbonate(FEC). Specifically, the organic solvent may include fluoroethylene carbonate(FEC) to increase the F atom content in the inorganic layer to achieve the effect intended by the present application.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include diethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the above cyclic carbonate-based compound is mixed with the low viscosity, low dielectric constant linear carbonate-based compound, such as dimethyl carbonate and diethyl carbonate, in an appropriate ratio, a gel-type electrolyte having high electrical conductivity may be prepared, which may be more preferably used.

Moreover, the lithium non-aqueous electrolyte further comprises a functional additive, and the functional additive may be included to prevent the induction of negative electrode collapse in a high power environment, or to further improve the low temperature high rate discharge characteristics, high temperature stability, overcharge prevention, swelling improvement effects during high temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and specifically 1 wt.% to 5 wt.% based on the total weight of the gel-type electrolyte. In a case in which the amount of the sultone-based compound in the gel-type electrolyte is greater than 5 wt.%, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3 wt.% or less based on the total weight of the gel-type electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the gel-type electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the gel-type electrolyte.

Further, the halogen-substituted carbonate-based compound may include fluoroethylene carbonate(FEC), and may be included in an amount of 5 wt.% or less based on the total weight of the gel-type electrolyte. In a case in which the amount of the halogen-substituted carbonate-based compound in the gel-type electrolyte is greater than 5 wt.%, cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the gel-type electrolyte. If the content of the cyclic carbonate-based compound in the gel-type electrolyte is greater than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of 3 wt.% or less based on the total weight of the gel-type electrolyte.

The borate-based compound may include lithium oxalyldifluoroborate, and may be included in an amount of 3 wt.% or less based on the total weight of the gel-type electrolyte.

The lithium salt-based compound is a compound different from the lithium salt included in the lithium non-aqueous electrolyte. The lithium salt-based compound may include at least one compound selected from the group consisting of LiPO₂F₂, LiODFB, LiBOB (lithium bisoxalate borate (LiB(C₂O₄)₂) and LiBF₄, and may be included in an amount of 3 wt.% or less based on the total weight of the gel-type electrolyte.

Two or more kinds of the functional additives may be mixed, and included in an amount of 20 wt.% or less, specifically 0.1 wt.% to 10 wt.%, based on the total weight of the lithium non-aqueous electrolyte. If the content of the functional additive is greater than 20 wt.%, there is a possibility that excessive side reactions in the gel-type electrolyte may occur during charge and discharge of the battery. In particular, it is not sufficiently decomposed at high temperatures, and may exist as an unreacted material or in a precipitated state in a gel-type electrolyte at room temperature. Thereby, side reactions may occur in which the lifetime or resistance characteristics of the lithium metal battery are reduced.

### Method for manufacturing lithium secondary battery

Meanwhile, according to another embodiment of the present disclosure, there is provided a method for manufacturing the lithium secondary battery.

Specifically, the method for manufacturing the lithium secondary battery comprising the steps of:
forming an oxide-based solid electrolyte layer including lithium aluminum titanium phosphate(LATP) on one side or both sides of a substrate to prepare a separator;
forming a positive electrode active material layer on one side or both sides of a positive electrode current collector to prepare a positive electrode, and forming a negative electrode active material layer on one side or both sides of a negative electrode current collector to prepare a negative electrode;
interposing the separator between the positive electrode and the negative electrode so that the oxide-based solid electrolyte layer and the negative electrode active material layer face each other to thereby prepare an electrode assembly;
incorporating the electrode assembly and the electrolyte into a secondary battery case to manufacture a secondary battery;
positioning the secondary battery between a plurality of pressure plates and applying pressure to the secondary battery; and
activating the secondary battery under a state of applying pressure thereto.

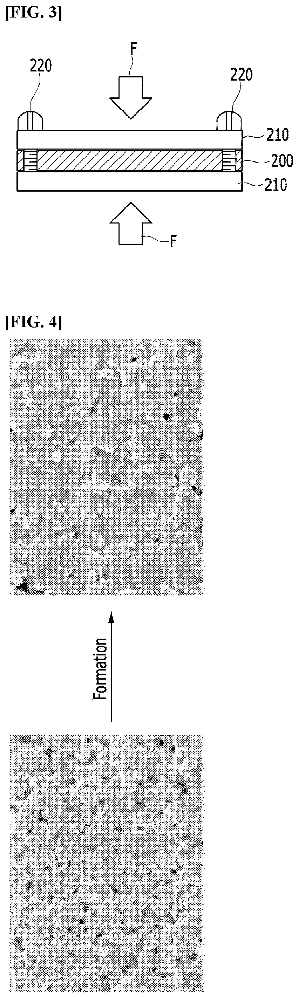

FIGS. 2 and 3 schematically show the top view and cross-sectional view of the pressing device applied to the method for manufacturing the lithium secondary battery, respectively.

The lithium secondary battery according to the present disclosure is manufactured by preparing the above-mentioned positive electrode, negative electrode and separator, respectively, and laminating in a manner that the oxide-based solid electrolyte layer of the separator and the negative electrode active material layer of the negative electrode face each other to thereby prepare the electrode assembly, which is then incorporated together with the electrolyte into a secondary battery case.

Then, referring to FIGS. 2 and 3, in a state where a plate-shaped pressure plate 210 is positioned at upper or lower sides or left or right sides of the lithium secondary battery 200, applying pressure to the upper or lower sides or left or right sides of the lithium secondary battery 200. In FIGS. 2 and 3, since the pressure plate 210 is used as an intermediate medium while a predetermined pressure F is applied to the upper and lower parts of the lithium secondary battery 200, the pressure can be applied more uniformly as compared to the case in which the pressure is directly applied to the lithium secondary battery 200 without an intermediate medium or the pressure is applied to only one side of the upper side and the lower side.

Meanwhile, one side of the lithium secondary battery 200 may be fixed to a support, and the pressure is applied only to the opposite side. For example, in a state where a movable pressure plate 210 continuously applies pressure to the immovable support (i.e., the support and the pressure plate are completely and closely attached), an external force is applied to the pressure plate 210, to temporarily form a predetermined space for inserting the lithium secondary battery 200, and then the external force applied to the pressure plate 210 is removed. At this time, it can be very easy to apply uniform pressure F to both sides of the lithium secondary battery 200.

Here, a plurality of pressure plates 210 may be fastened with a plurality of pressure bolts 220 to apply pressure to the lithium secondary battery 200. As mentioned above, when fastening with the pressure bolt 220 to apply the pressure F, there is an advantage that the pressure can be applied to the correct positions.

For example, the applied pressure F may be represented by the fastening torque strength of the pressure bolt 220, and the pressure bolt 220 may press with a fastening strength of 6 kgf·cm or more, and more specifically, may press at a fastening strength in the range of 10 to 20 kgf·cm.

When the pressure is applied in a fastening strength of less than 6 kgf·cm, it may be difficult to form effective SEI.

Meanwhile, when two or more lithium secondary batteries are stacked, and the pressure is applied to the top and bottom simultaneously with the pressure plate as intermediate medium, the pressure can be applied uniformly to the plurality of lithium secondary batteries. In addition, a pressure applying manner of multi-layer structure is also feasible, i.e., the lithium secondary batteries are inserted one by one between the plurality of pressure plates, and then the pressure is applied.

Then, the activating may be performed under a state of applying pressure to the secondary battery.

Here, the activating may include the charge and discharge process, and may be performed at 25°C to 60°C, and more specifically, may be performed under a temperature condition of 40°C to 60°C.

Specifically, through the activating process in the manufacturing process of the lithium secondary battery as mentioned above, the inorganic layer containing the reduced product of the LATP and the SEI material can be formed at the interface between the oxide-based solid electrolyte layer and the negative electrode active material layer, and the forming manner of the inorganic layer containing the reduced product of the LATP and the SEI material can be controlled with high quality, by applying a specific range of pressure to the lithium secondary battery in the activating step.

Hereinafter, the lithium secondary battery according to an embodiment of the present disclosure will be described with reference to Examples in order to demonstrate that it exhibits improved effects.

### <Example 1> (LATP)

An oxide-based solid electrolyte layer (thickness: 2 micrometers) was formed on both sides of a polyolefin substrate (polyethylene, thickness: 9µm) to prepare a separator.

Here, the oxide-based solid electrolyte layer was prepared by mixing Li_{1.3}Al_{0.3}Ti_{1.7}(PO₄)₃: acrylic copolymer (CSB130, Toyoink) at a weight ratio of 95:5, dispersing the mixture in acetone to prepare an electrolyte slurry, coating the electrolyte slurry on one side of the polyolefin substrate, and drying it.

### <Comparative Example 1> (CCS)

An organic/inorganic mixed layer (thickness: 20 micrometers) was formed on both sides of a polyolefin substrate (polyethylene, thickness: 9 µm) to prepare a separator.

Here, the organic/inorganic mixed layer was prepared by mixing Al₂O₃:CSB130 at a weight ratio of 95:5 and dispersing the mixture in NMP to prepare an organic/inorganic slurry, coating the organic/inorganic slurry on one side of the polyolefin substrate, and drying it.

### <Experimental Example 1>

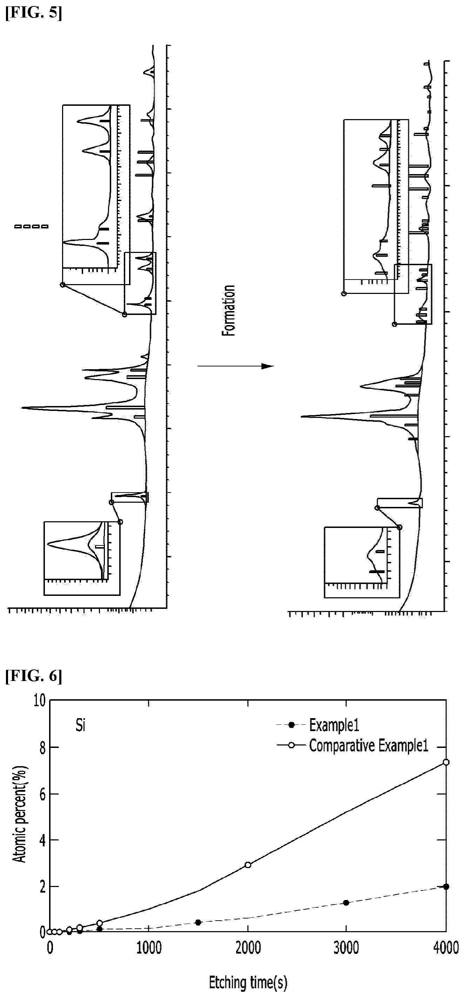

First, a surface SEM photograph of the separator prepared in Example 1 was taken and shown in FIG. 4, and an XRD analysis was performed and shown in a graph in FIG. 5.

Then, a 15 micrometer thick aluminum(Al) metal film was prepared as a positive electrode current collector. Li(Ni_{0.86}Co_{0.05}Mn_{0.07}Al_{0.02})O₂ as a positive electrode active material, carbon nanotubes as a conductive material, and PVDF as a binder were added in a weight ratio of 96:1:3 in an NMP solvent, and dispersed to prepare a positive electrode slurry. The positive electrode slurry was coated to a thickness of 60 micrometers on one side of the aluminum metal film, followed by drying and rolling to prepare a positive electrode.

An 8 micrometer thick copper(Cu) metal film was prepared as a negative electrode collector. A pre-lithiated SiO as a negative electrode active material, carbon black as a conductive material, and SBR and CMC as binders were added in a weight ratio of 80 10 : 9.5 : 0.5 in NMP solvent, and dispersed to prepare a negative electrode slurry. The negative electrode slurry was coated to a thickness of 100 micrometers on one side of the copper metal thin film, followed by drying and rolling to prepare a negative electrode.

The separators prepared in Example 1 were interposed between the positive electrode and the negative electrode, and the oxide-based solid electrolyte layer or the organic-inorganic mixed layer was made to face the negative electrode to prepare an electrode assembly. An electrolyte obtained by dissolving LIFSI at 1.0M and LiPF₆ at 0.5M in a non-aqueous organic solvent having a composition of fluoroethylene carbonate (FEC):diethyl carbonate (DEC) = 10:90 (volume ratio) was injected to the electrode assembly to manufacture a 100 mA pouch-type bi-cell.

The bi-cells were charged at a constant current of 0.1 C at 25°C until voltage reached 4.20 V in a state of pressing a pressure bolt with a fastening strength of 12 kgf·cm each, aged at 25°C for 24 hours, aged at 60°C for 20 hours and then fully discharged at a constant current of 0.33C. The entire cycle was repeated three times.

After disassembling the bi-cells that finished the charge and discharge, SEM photographs of the separator surface were taken and shown in FIG. 4 along with the SEM photographs of the separator before charging and discharging. XRD analysis was performed by irradiating the surface of the separator with X-rays at angles of 0 to 50 degrees and comparing the resulting diffraction pattern with the peak positions of LATP and lithiated LATP from ICDD, and the results are shown in FIG. 5.

Referring to FIGS. 4 and 5, it can be confirmed that a Li reduced product is formed on the surface of the separator according to the present disclosure after charging and discharging, thereby filling the pores of the oxide-based solid electrolyte layer.

### <Experimental Example 2>

Bi-cells were manufactured using the separator of Example 1 and the separator of Comparative Example 1 in the same manner as in Experimental Example 1, and subjected to charging and discharging.

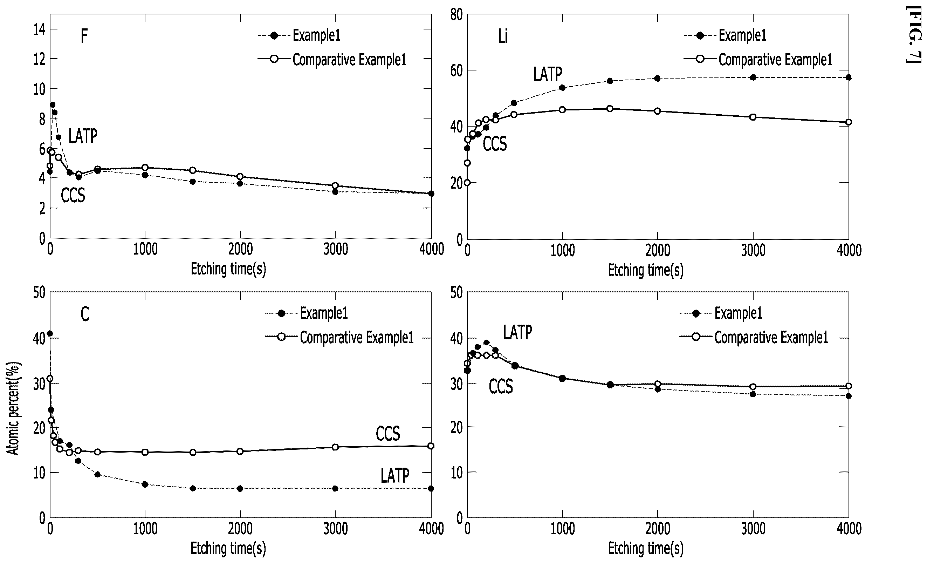

Then, the bi-cells was disassembled, and then the separator sample was etched on the negative electrode surface with a sputtering gun of an XPS equipment, and subjected to element quantitative analysis in the depth direction (spot size: 200µm, sputtering gun energy: 1000 eV, etching rate: 1.08 nm/sec), through which the content of elements was analyzed to examine the component analysis of the SEI material and its thickness, and the results are shown in FIGS. 6 and 7 below. In addition, the atom content of F is shown in Table 1 below.

Specifically, FIG. 6 shows the results of analyzing the Si element content on the negative electrode surface, and the thickness of the inorganic layer was examined therefrom. FIG. 7 shows the analysis of the content of the other elements Li, F, C and O.

Referring to FIG. 6, it can be seen that in the negative electrode of the bi-cell in which the separator of Comparative Example 1 was employed, the Si content increases within a short period of time, indicating that the thickness of the inorganic layer is relatively thin, whereas in the negative electrode of the bi-cell in which the separator of Example 1 of the present disclosure was employed, Si exposure appears later, indicating that a thicker inorganic layer is formed.

On the other hand, referring to FIG. 7 and Table 1 below, it can be seen that on the negative electrode surface of the bi-cell in which the separator of Example 1 was employed, the content of Li, F, and O is high and the content of C is low, indicating that SEI materials, such as LiF and Li₂O, are formed in large amounts.

**[Table 1]**

| | Example 1 | Comparative Example 1 |
|---|---|---|
| F atomic ratio max(%) | 8.9 | 5.9 |

### <Experimental Example 3>

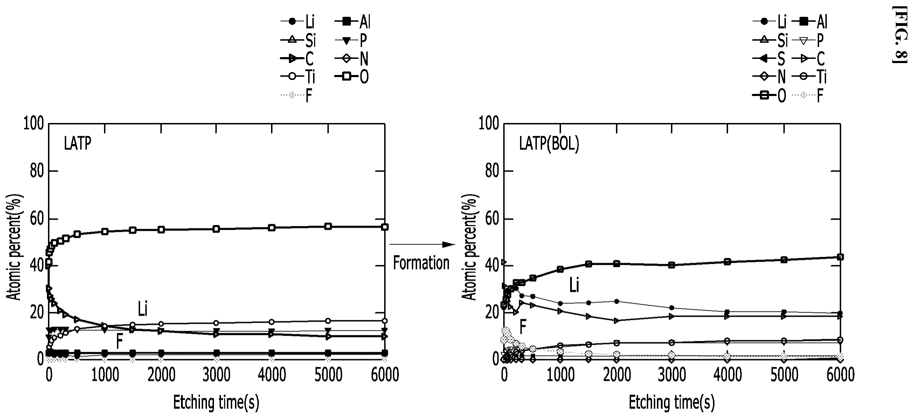

The separator of Example 1 was subjected to XPS profile analysis as in Experimental Example 2 and the content of elements was analyzed. The results are shown in FIG. 8.

Then, bi-cells were manufactured using the separator of Example 1 in the same manner as in Experimental Example 1, and subjected to charging and discharging.

After charging and discharging, the bi-cells were disassembled, and then the content of elements was analyzed through XPS profile analysis on the surface of the separator. The results are shown in FIG. 8 along with the analysis data of the separator before charging and discharging. In addition, the atom content of F is shown in Table 2.

Referring to FIG. 8 and Table 2, it can be seen that the content of F on the surface of the separator increases rapidly after charging and discharging, whereby F corresponding to the SEI component increases with charging and discharging, and an inorganic layer with excessive inorganic matter is formed.

**[Table 2]**

| | Example 1 |
|---|---|
| F atomic ratio max(%) | 12.2 |

### <Experimental Example 4>

Bi-cells were manufactured using the separator of Example 1 and the separator of Comparative Example 1 in the same manner as in Experimental Example 1, and subjected to charging and discharging. The fully discharged bi-cells were disassembled, the electrolytic cleaning was performed for the negative electrode, and then DSC evaluation was performed.

For the DSC evaluation, when the fully discharged electrode was heated at a temperature rise rate of 10°C/min in the range of 25 to 250°C, the heat flow at which an exothermic or endothermic reaction occurred was measured.

In addition, bi-cells were manufactured using the separator of Example 1 and the separator of Comparative Example 1 in the same manner as in Experimental Example 1, and subjected to charging and discharging. The bi-cells were again fully charged with CC-CV under a condition of 0.1°C and 4.35V, and then disassembled to perform the DSC evaluation on the negative electrode.

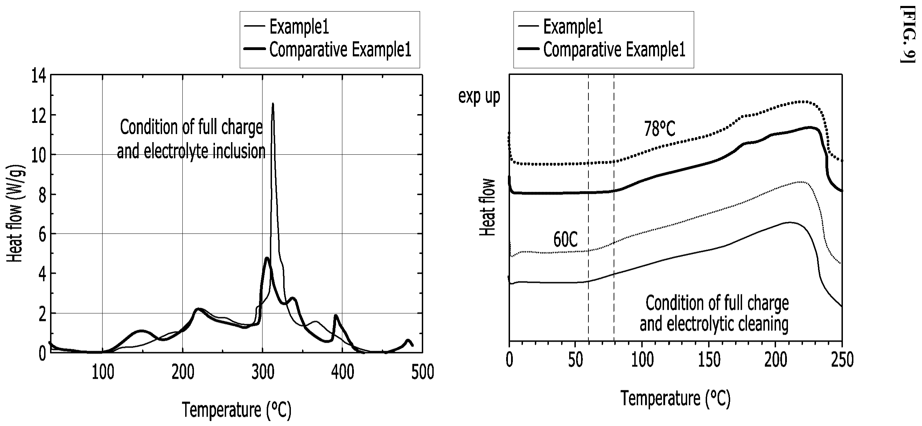

The results are shown in FIG. 9 below.

Referring to FIG. 9, it can be confirmed that in the negative electrode under the condition of full charge and electrolyte inclusion of the bi-cell including the separator according to Example 1 of the present disclosure, the main peak is broader than the case of including the separator of Comparative Example 1, and a split is observed. In addition, it can be confirmed that in the case of the full discharge and electrolytic cleaning conditions, the onset temperature shift was observed in the negative electrode of the bi-cells including the separator of Example 1 according to the present disclosure. From this, it can be seen that when the separator according to the present disclosure is employed, the thermal safety is superior.

### <Experimental Example 5>

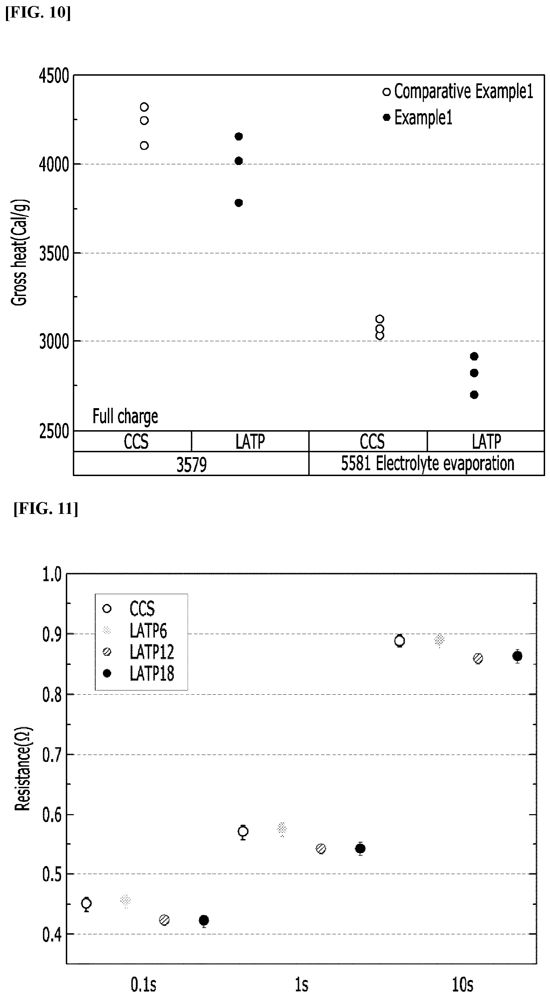

Under the same conditions as in Experimental Example 4, then the negative electrode was forcibly ignited by applying a spark to the material in an autoclave pressed under an O₂ atmosphere of 30 bar, the gross heat (water temperature) of the exothermic reaction was measured by calorimeter evaluation. The results are shown in FIG. 10.

Referring to FIG. 10, it can be confirmed that under conditions of full charge and electrolyte inclusion, the heat value of the negative electrode in the bi-cell including the separator of Example 1 decreases by about 5.7% (4224->3985 Cal/g) compared to the negative electrode in the bi-cell including the separator of Comparative Example 1, and that under conditions of full discharge and electrolytic cleaning, the heat value decreases by about 8.6% (3075->2812 cal/g).

From this, it can also be seen that when the separator according to the present disclosure is employed, the thermal safety is superior.

### <Experimental Example 6>

Bi-cells were manufactured using the separator of Example 1 and the separator of Comparative Example 1 in the same manner as in Experimental Example 1.

The manufactured bi-cells were charged at a constant current of 0.1 C at 45°C until voltage reached 4.20 V in a state of pressing a pressure bolt with a fastening strength of 6 kgf·cm('LATP6'), 12 kgf·cm('LATP12'), 18 kgf·cm('LATP18'), respectively, aged at 25°C for 24 hours, aged at 60°C for 20 hours and then fully discharged at a constant current of 0.33C. The entire cycle was repeated three times.

Then, when the state of charge was set to SOC 50 and a 2.5C discharge current was applied for 0.1, 10, and 30 seconds, the DCIR was measured, and the results are shown in FIG. 11.

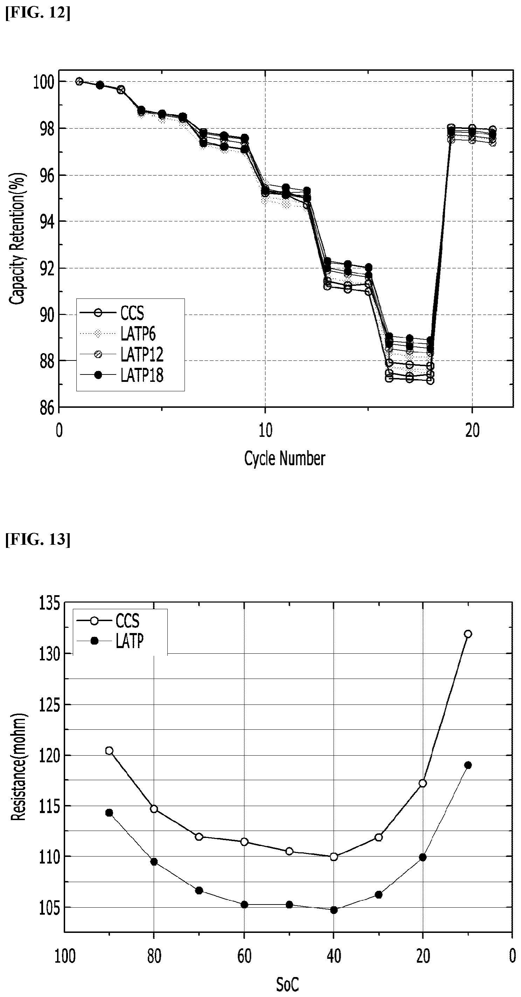

The discharge rate characteristics were also evaluated, and the results are shown in FIG. 12 below.

For the evaluation of the discharge rate characteristics, the bi-cells were charged with CC/CV at 0.2C (cut when CV current reached 0.05C), and discharged at 0.2C, 0.33C, 0.5C, 1C, 2C, and 3C three times, respectively. In the view of the capacity at each third time, the retention rate of the discharge capacity at high rates relative to the discharge capacity at 0.2C was confirmed.

Referring to FIGS. 11 and 12, it can be confirmed that the resistance decreased when the separator according to the present disclosure was employed, and that the rate of reduction thereof was greater when a pressing force increased. On the other hand, it can be confirmed that in terms of capacity, there is little significant difference in performance or that the performance is superior.

### <Experimental Example 7>

A positive electrode was prepared in the same manner as in Experimental Example 1, and the negative electrode was prepared in the same manner, except that a mixture of graphite and SiO in a weight ratio of 94.5:5.5 was used as the negative electrode active material.

In addition, the separator prepared in Example 1 and Comparative Example 1 was used, and the oxide-based solid electrolyte layer or the organic-inorganic mixed layer was made to face the negative electrode, thereby preparing an electrode assembly. An electrolyte in which 1M LiPF₆ was dissolved in a carbonate solvent of EC:EMC = 3:7 (vol%) was used, and in the manufacture of the stack cell, the positive electrode/ negative electrode were stacked three times, respectively, to manufacture an 840 mA pouch-type battery cell.

The manufactured bi-cells were charged at a constant current of 0.1 C at 45°C until voltage reached 4.20 V in a state of pressing a pressure bolt with a fastening strength of 12 kgf·cm each, aged at 25°C for 24 hours, aged at 60°C for 20 hours, and then fully discharged at a constant current of 0.33C. The entire cycle was repeated three times.

The state of charge was set to SOC 50, and the DCIR was measured by discharging at 2.5C. The results are shown in FIG. 13.

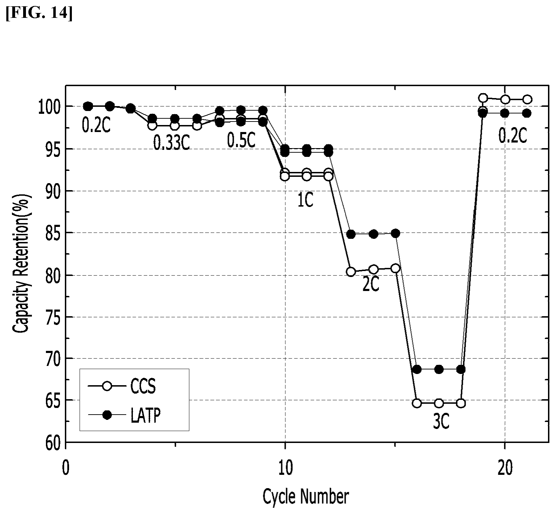

The discharge rate characteristics were also evaluated, and the results are shown in FIG. 14 below.

The method for the evaluation of the discharge rate characteristics is as described in Experimental Example 6.

Referring to FIGS. 13 and 14, it can be confirmed that the resistance decreased when the separator according to the present application was employed, and that the rate of reduction thereof was greater when a pressing force increased. On the other hand, it can be confirmed that in terms of capacity, there is little significant difference in performance or that the performance is superior.

Based on the above disclosure, various applications and modifications can be carried out by those of ordinary skill in the art without deviating from the spirit and scope of the present disclosure.

### [Industrial Applicability]

The lithium secondary battery according to the present disclosure forms an oxide-based solid electrolyte layer containing LATP on a separator substrate and contacts it with a negative electrode active material layer, so that a LATP reduced product is formed together with an SEI material at an interface between them, thereby forming a thick inorganic matter-rich SEI with a high F atom content, which is effective in improving the thermal safety of the lithium secondary battery.

In addition, the formation mode of this inorganic matter-rich SEI with a high F atom content can be controlled to improve battery performance.

## Claims

1. A lithium secondary battery comprising:
a positive electrode which includes a positive electrode current collector, and a positive electrode active material layer formed on one side or both sides of the positive electrode current collector,
a negative electrode which includes a negative electrode current collector, and a negative electrode active material layer formed on one side or both sides of the negative electrode current collector, and
a separator which includes a substrate, and an oxide-based solid electrolyte layer formed on one side or both sides of the substrate and including lithium aluminum titanium phosphate(LATP),
wherein the negative electrode active material layer and the oxide-based solid electrolyte layer face each other,
wherein an inorganic layer containing a reduced product of the LATP and an SEI material is formed at an interface between the oxide-based solid electrolyte layer and the negative electrode active material layer, and
wherein the atom content of F in the inorganic layer is included at 7 to 15 atomic percent(%) based on all atoms present in the inorganic layer.

2. The lithium secondary battery according to claim 1,
wherein the inorganic layer fills a part or all of the pores of the oxide-based solid electrolyte layer, or forms a separate layer at an interface between the oxide-based solid electrolyte layer and the negative electrode active material layer, or includes all of these forms.

3. The lithium secondary battery according to claim 2,
wherein the inorganic layer is configured to fill the pores of the oxide-based solid electrolyte layer at 10 volume% to 100 volume% based on the total volume of the pores, and form a separate layer having a thickness of 5 nm to 100 nm.

4. The lithium secondary battery according to claim 5,
wherein the LATP reduced product is formed in a form in which 50 wt.% or more on a weight basis fill the pores of the oxide-based solid electrolyte layer along the surface of the LATP particles,
the SEI material is formed together with the LATP reduced product in a space charge region where the concentration of Li+ is locally high, or is formed in a form that fills the pores of the oxide-based solid electrolyte layer on the surface of the LATP reduced product, or is formed as a separate layer on the surface of the oxide-based solid electrolyte layer, or is formed to include all of these forms.

5. The lithium secondary battery according to claim 1,
wherein the LATP reduced product comprises a lithiated-LATP formed by a spontaneous lithiation reaction of the LATP as shown in the following Reaction Formula 1.
[Reaction Formula 1] Li₁₃Al_{0.3}Ti_{1.7}(PO₄)₃ -> Li₃Al_{0.3}Ti_{1.7}(PO₄)₃

6. The lithium secondary battery according to claim 1,
wherein the SEI material comprises LiF.

7. The lithium secondary battery according to claim 5,
wherein the SEI material further comprises at least one material selected from the group consisting of Li₂CO₃, and Li₂O.

8. The lithium secondary battery according to claim 1,
wherein the inorganic layer is composed of a LATP reduced product and an SEI material.

9. The lithium secondary battery according to claim 1,
wherein the oxide-based solid electrolyte layer is formed on both sides of the substrate.

10. The lithium secondary battery according to claim 1,
wherein the substrate is a polyolefin substrate.

11. The lithium secondary battery according to claim 1,
wherein the oxide-based solid electrolyte layer is composed of an oxide-based solid electrolyte containing lithium aluminum titanium phosphate(LATP) and a binder.

12. The lithium secondary battery according to claim 1,
wherein the oxide-based solid electrolyte layer is formed to a thickness of 0.1 to 20 µm on one side of the substrate.

13. The lithium secondary battery according to claim 1,
wherein the positive electrode active material layer comprises a lithium transition metal oxide represented by the following Chemical Formula 1 as a positive electrode active material:
[Chemical Formula 1] Li₁₊ₓNiₐCo_{b}Mn_{c}M_{1-(a+b+c)}O₂
wherein,
M is at least one selected from the group consisting of Al, Fe, V, Cr, Ti, Ta, Mg, and Mo, and
0≤x≤0.5, 0<a<1, 0<b<1, 0<c<1.

14. The lithium secondary battery according to claim 1,
wherein the negative electrode active material layer comprises 80 wt.% or more of a pre-lithiated silicon oxide as a negative electrode active material based on the total weight of the negative electrode active material.

15. The lithium secondary battery according to claim 1,
wherein the lithium secondary battery further comprises an electrolyte which includes LiFSI as a lithium salt, and comprises fluoroethylene carbonate(FEC) as an electrolyte solvent.

16. A method for manufacturing the lithium secondary battery of claim 1, the method comprising the steps of:
forming an oxide-based solid electrolyte layer including lithium aluminum titanium phosphate(LATP) on one side or both sides of a substrate to prepare a separator;
forming a positive electrode acitve material layer on one side or both sides of a positive electrode current collector to prepare a positive electrode, and forming a negative electrode acitve material layer on one side or both sides of a negative electrode current collector to prepare a negative electrode;
interposing the separator between the positive electrode and the negative electrode so that the oxide-based solid electrolyte layer and the negative electrode active material layer face each other to thereby prepare an electrode assembly;
incorporating the electrode assembly and an electrolyte into a secondary battery case to manufacture a secondary battery;
positioning the secondary battery between a plurality of pressure plates and applying pressure to the secondary battery; and
activating the secondary battery under a state of applying pressure thereto.

17. The method for manufacturing the lithium secondary battery according to claim 16,
wherein the plurality of pressure plates are fastened with a plurality of pressure bolts to apply pressure.

18. The method for manufacturing the lithium secondary battery according to claim 17,
wherein the pressure bolt presses the secondary battery with a fastening strength of 6 kgf·cm or more.

19. The method for manufacturing the lithium secondary battery according to claim 17,
wherein the pressure bolt presses the secondary battery at a fastening strength in the range of 10 to 20 kgf·cm.

20. The method for manufacturing the lithium secondary battery according to claim 17,
wherein the activating step is performed under a temperature condition of 40°C to 60°C.
